# EUROPEAN PATENT APPLICATION

(11) **EP 1 591 094 A1**
(43) Date of publication of application: **02.11.2005**
(21) Application number: 05009214.7
(22) Date of filing: 27.04.2005
(51) Int. Cl.: A61G 5/04, B60L 15/20

(54) **Wheelchair with drive wheels responsive to operational characteristics of casters**

(30) Priority: 27.04.2004 US 565608 P
(71) Applicant: Sunrise Medical HHG Inc., Longmont, Colorado 80503 (US)
(72) Inventor: RUNKLES, Richard R., Longmont, CO 80503 (US); TASKER, Peter, Shropshire WV16 5PA (GB); MANSELL, Wayne, Stourbridge, DY8 4UY (GB)
(74) Representative: Wardley, Diana Mary

(57) **Abstract**

A wheelchair comprises a caster, a drive wheel, a sensor, and a controller. The sensor is provided for sensing operational characteristics of the caster. The controller is provided for controlling at least one of the speed, acceleration and deceleration of the drive wheel when the sensor senses a certain operational characteristic of the caster.

## Description

### BACKGROUND OF INVENTION

This invention relates in general to land vehicles and, more particularly, to a control system for land vehicles. Most particularly, the invention relates to a control system for power wheelchairs.

A conventional wheel configuration for a powered wheelchair typically includes two drive wheels (i.e., motor driven wheels) and two or four idler wheels or casters. Steering of the wheelchair is achieved by differentially driving the drive wheels (i.e., causing the drive wheels to rotate at different speeds and/or directions). A typical wheelchair caster includes a wheel, a fork, and a stem. The stem is adapted to rotate about a vertically oriented axis. Caster stem bearings or bushings allow the stem to rotate smoothly, with low friction. The fork extends from the stem and supports the wheel for rotational movement about an axle. The axle is offset with respect to the stem. The offset distance of the axle with respect to the stem is known as the caster "trail". As the caster is displaced during wheelchair motion, the fork will rotate about the stem such that the caster points in the direction of travel of the wheelchair. This trailing action is passive and bears no impact on the steering control of the wheelchair other than to follow in the direction dictated by the drive wheels. That is to say, the casters provide support and stability for the wheelchair but play no active role in steering the wheelchair or keeping the wheelchair on track.

During the operation of the wheelchair, the caster, though a passive component, may, for various reasons, not be pointed in the direction of travel of the wheelchair. In this condition, it may be undesirable for the wheelchair occupant to have unrestricted control of the speed, acceleration and deceleration of the wheelchair.

In addition, the caster may flutter (i.e., be subject to oscillating movement) during the wheelchair operation. This is undesirable because such movement affects the smoothness of the wheelchair operation and produces an annoying fluttering sound.

What is needed is a wheelchair with improved control system that controls the operation of the drive wheels in response to the operational characteristics of the caster.

### SUMMARY OF INVENTION

The present invention is directed toward a wheelchair that meets the foregoing needs. The wheelchair comprises a caster, a drive wheel, a sensor for sensing operational characteristics of the caster, and a controller for controlling at least one of the speed, acceleration or deceleration of the drive wheel when the sensor senses a certain operational characteristics of the caster.

Various objects and advantages of this invention will become apparent to those skilled in the art from the following detailed description of the preferred embodiment, when read in light of the accompanying drawings.

### BRIEF DESCRIPTION OF DRAWINGS

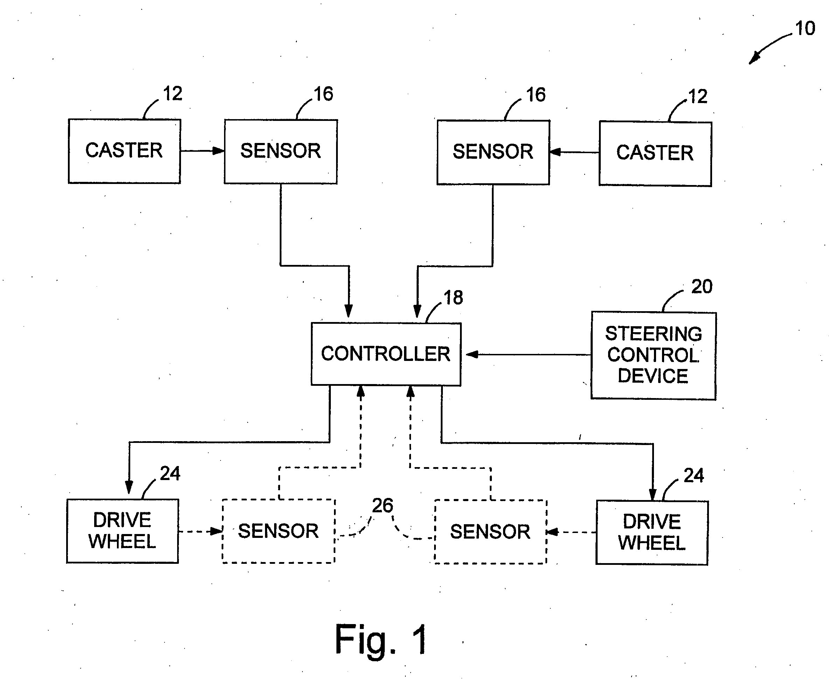

Fig. 1 is a diagrammatic representation of a control system for controlling the drive wheels of a wheelchair in response to certain operational characteristics of a wheelchair caster.

### DETAILED DESCRIPTION

Referring now to the drawings, there is illustrated in Fig. 1 a power wheelchair 10 having casters 12 and feedback sensors 16, such as potentiometers or encoders, which are controlled by a controller 18, such as a closed loop servo system controller. A steering control device 20, such as a joystick, may serve as an input to direct the wheelchair 10 in a direction of travel. A control algorithm or look-up table may be used to coordinate the operational characteristics of the casters 12 and drive wheels 24, which are differentially driven to steer the wheelchair 10 in a desired direction of travel. Feedback sensors 26 may also measure the speed, acceleration and deceleration of the drive wheels 24. The wheelchair 10 may be a front, mid, rear or all-wheel drive configuration.

The orientation of the casters 12, as measured by the feedback sensors 16, is provided in the form of a signal to the controller 18. The controller 18, via the control algorithm or look-up table, may be compare the orientation of the casters 12 to a desired direction of travel, as input through the steering control device 20, to determine whether the casters 12 are pointed in the desired direction of travel. If the casters 12 are not pointed in the desired direction of travel, the controller 18 may control the speed, acceleration and deceleration of the drive wheels 24 to minimize the speed, acceleration and deceleration of the drive wheels 24. The orientation of the casters 12, the desired direction of travel of the wheelchair 10, and the speed, acceleration and deceleration of the drive wheels 24 is monitored until the casters 12 are pointed in the desired direction of travel of the wheelchair 10, at which point, the control of the speed, acceleration and deceleration of the drive wheels 24 returns to a default control mode (e.g., a standard or conventional control mode as prescribed for a particular wheelchair occupant and wheelchair). The orientation of the casters 12, the desired direction of travel of the wheelchair 10, and the speed, acceleration and deceleration of the drive wheels 24 may be continually monitored to determine if a direction of travel changes (i.e., via the steering control device 20), which differs from the direction that the casters 12 are pointing, and which requires further control of the speed, acceleration and deceleration of the drive wheels 24. Alternatively, the orientation of the casters 12 and the desired direction of travel of the wheelchair 10 may be monitored when the wheelchair 10 is idle to determine if a desired direction of travel differs from the direction that the casters 12 are pointing. In such case, the casters 12 can be oriented the the desired direction of travel prior to permitting the drive wheels 24 to be driven.

In addition to sensing orientation, the feedback sensor 16 may sense caster flutter, or oscillating movement of the caster stem, and provide a signal to the controller 18 when such flutter is present. If caster flutter is present, the controller 18 controls the speed and acceleration of the drive wheels 24 to minimize the speed and acceleration of the drive wheels 24 until the flutter ceases. Once the flutter ceases, control of the speed, acceleration and deceleration of the drive wheels 24 returns to a default control mode. The feedback sensors 16 may be continually monitored to determine if the caster flutter exists and if further control of the speed and acceleration of the drive wheels 24 is required.

The principle and mode of operation of this invention have been explained and illustrated in its preferred embodiment. However, it must be understood that this invention may be practiced otherwise than as specifically explained and illustrated without departing from its spirit or scope.

## Claims

1. A wheelchair comprising:
at least one caster;
at least one drive wheel;
a sensor for sensing operational characteristics of the caster; and
a controller for controlling at least one of the speed, acceleration or deceleration of the drive wheel when the sensor senses certain operational characteristics of the caster.

2. The wheelchair of claim 1, wherein the sensor is configured to sense the orientation of the caster and provide input to the controller to control speed, acceleration and deceleration of the drive wheel when the caster is not pointed in a desire direction of travel of the wheelchair.

3. The wheelchair of claim 1, wherein the sensor is configured to sense caster flutter and provide input to the controller to control speed and acceleration of the drive wheel when caster flutter exists.
